# EUROPEAN PATENT APPLICATION

(11) **EP 0 810 251 A2**
(43) Date of publication of application: **03.12.1997**
(21) Application number: 97303599.1
(22) Date of filing: 28.05.1997
(51) Int. Cl.: C08G 75/04

(54) **Storage-stable one-component air activated formulations of polythiol and polyene employing iron compound**

(30) Priority: 28.05.1996 US 654392
(71) Applicant: LOCTITE (IRELAND) LIMITED, Dublin 24 (IE)
(72) Inventor: Kneafsey, Brendan, Lucan, Co. Dublin (IE); Barnes, Rory, Walkinstown, Dublin 12 (IE)
(74) Representative: Marchant, James Ian

(57) **Abstract**

Storage-stable one-component air activated formulations of polythiol and polyene employ an activator system which includes a soluble iron compound. The compositions are free of compounds having a structure of the formula I below: 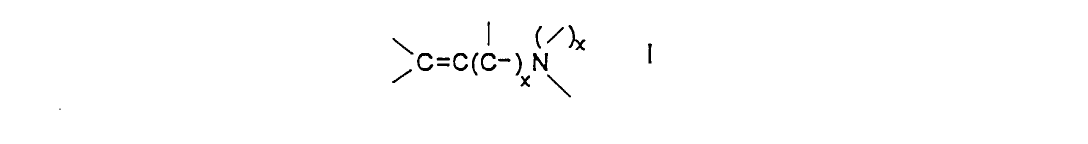 are free of oxime compounds, are free of peroxides or peroxide precursor compounds which produce peroxide in the absence of air and are free of other ingredients, which under dark conditions are significant source of radicals in the absence of air. The iron compound is combined with the polythiol and polyene components of the inventive composition under anaerobic conditions and then maintained under anaerobic conditions until the time of use.

## Description

### Background of the Invention

As used herein, the term polyene refers to a compound having at least two non-aromatic carbon-carbon double bonds per molecule which are susceptible to addition reactions with thiol groups. The term polythiol refers to a compound having at least two thiol groups per molecule. A thiol-ene composition is a mixture of a polyene and a polythiol formulated to cure at least predominately by addition of thiol groups across the olefinic double bond of the polyene. Generally the composition will include a free radical initiator such as a peroxy compound or a free radical photoinitiator to initiate the thiol-ene addition reactions.

Thiol-ene formulations are known from Oswald, *Die Macromolekulare Chemie, 97,* 258-266 (1966); US 3,662,023, US 3,661,744, US 4,008,341, US 4,119,617, US 4,571,420, US 4,808,638, and US 5,021,512. In general, such formulations are cured by radical reaction, or less frequently acid catalyzed reaction, to form a polythioether. In (meth)acrylic systems, thiols at much less than stoichiometric quantities of thiol relative to the ene will also act as chain transfer agents in (meth)acrylate homopolymerizations to produce hybrid thioether/poly(meth)acrylate polymers. See US 4,439,600.

Similar reactions are reported for the addition of thiols to acetylenic compounds in Oswald et al. *J Amer. Chem. Soc. 1963,* vol. 85, page 1969 and in US 3,700,574.

Stable thiol-ene compositions are normally obtained by the inclusion of additional stabilizers and free radical scavengers. In the absence of such stabilizers thiol-ene compositions are usually unstable and polymerization reactions are initiated by the presence of air or oxygen. However, these reactions are generally quite sluggish in rate and require the presence of free radical sources to accelerate this reaction. For example see *A. C.S. Div. Org. Coatings Plastics Chem., 165*^{*th*} *National Meeting,* 1973, Vol.33. No.1 pages 295-302, which reports:
thiol/ene + oxygen slow reaction (hours to days)
thiol/ene + radicals fast reaction (seconds to minutes)
The authors of this reference also state that such systems can remain stable under anaerobic conditions for several months. However, the rate of cure is sluggish, usually requiring about one day under ambient conditions. Full cure requires several days.

In US 4,808,638, incorporated hcrein by refercnce, therc are described photocurable thiol-ene compositions comprising a norbomene functional resin, a polythiol and a free radical photoinitiator. Further description of this system may be found in Jacobine et al, *Proceedings Of ACS Division of Polymeric Materials: Science and Engineering,* Vol. 60, pp. 211-216 (1989). Further norbomenyl functional compounds useful in thiol-ene compositions are described in US Pat. No. 4,808,638, US 5,034,490, US 5,171,816, US 5,182,360 and US 5266670 and in copending application Ser. No. 07/619,068 filed November 28, 1990.

In US 3,616,041 and US 3,650,802 there are described thiol-ene formulations which include iron compounds as a portion of the substrate or as a primer coat or reactive top coat. The compositions of these references are all two-part formulations, in which the iron compound is added only at the time of use. The reference teaches that when oxygen is not directly accessible to the iron compound, as when the iron compound is part of the substrate or used as a primer coat on the substrate and the thiol-ene composition coated thereon, it is necessary to add an oxime compound to the thiol-ene composition.

In copending application Ser. No. 08/173,267, filed December 23, 1993, as a continuation of Ser. No. 07/847,157, filed March 5, 1992, storage-stable ethylenically unsaturated monomer compositions, which are activated to rapidly cure by brief exposure to air at the time of use, can be made by exclusion of peroxide compounds and careful prevention ofexposure ofthe composition to air until the time of use. Such compositions employ an activator system which includes a compound which is auto-oxidizable when exposed to air and which, after exposure to air, is capable of effecting polymerization of the free-radically polymerizable monomer, the auto-oxidizable compound having a formula which includes the structure I: 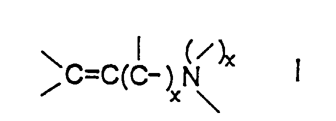 where x is 0 or 1, and where the lines representing unfilled valencies indicate bonds to carbon, hydrogen or hetero atoms, alone or in combination with a weak acid. Among the various examples of such formulations are acrylic ester based formulations in which certain iron compounds are used as co-accelerators and a thiol-ene formulation in which a vanadium compound is used as a co-accelerator.

US Patent 4,571,420 describes the preparation of one component compositions comprising polythiols, low Tg polymers with pendant unsaturation and vanadium compounds. The compositions cure tack free upon exposure to air after greater than 20 hours. Improved shelf-life stability is claimed by storage in air free containers.

US 4,284,539 describes storage stable thiol-ene systems, in which the thiol and ene components have inorganic polysiloxane backbones, which are well known to be highly permeable to oxygen. The compositions contain iron, manganese or nickel salts and activated to cure by exposure to atmospheric oxygen.

In US 4,698,385 air-activated thiol-ene systems, in which the thiol and ene components are both organic compounds, are described. The compositions contain vanadium compound activators. In comparative examples (Examples 53, *55,* 57; 59 and 63) iron compounds did not activate cure of thin films to a solid even after 189 hours exposure. The ene component of these formulations was a mixture of a triacrylate and α-methylstyrene.

### Summary of the Invention

The present invention pertains to novel one-part storage stable compositions oforganic polythiol and an organic mono-ene or polyene which cure in the presence or absence of air after activation by exposure to air (oxygen) for a brief period at the time of use. The compositions employ a soluble iron compound as a polymerization activator and are free of compounds having a structure of the formula I above, are free ofoxime compounds, are free of peroxides or peroxide precursor compounds which produce peroxide in the absence of air and are free of other ingredients, which under dark conditions are significant source of radicals in the absence of air. The iron compound is combined with the polythiol and ene components of the inventive composition under anaerobic conditions and then maintained under anaerobic conditions until the time of use. Preferred compositions of the invention also employ an organic acid, especially acrylic acid or methacrylic acid as a further component of the composition.

### Detailed Description of the Invention

The ene component of the compositions of the invention may be any of the various organic polyene compounds used in thiol-ene formulations. Examples include compounds with a plurality of allyl groups, vinyl ether groups, (meth)acrylic groups, vinyl thioether groups, norbomenyl groups, nadic groups, or styrylether groups. Compounds with acetylenic groups may also be used. Compounds with at least two unconjugated internal or pendant carbon-carbon double bounds per molecule, in particular butadiene or isoprene polymers and copolymers, including block copolymers such as SBS and SIS may also be used. Extensive examples of polyenes useful in the inventive formulations are provided in US 3,661,744, US 3,700,574, US 4,119,617, US 4,157,421, US 4,808,638, and US 5,021,512, all of which arc incorporated herein by reference. Preferred polyenes are organic compounds containing a plurality of norbornene, vinyl, vinyl ether, acrylic or allylic groups.

Compositions of the invention may also be prepared in which some or all of the ene component of the formulation is a mono-ene, especially where the ene group is a (meth)acrylate ester compound or a mixture including one or more (meth)acrylate ester compounds. In such case the thiol compound should bc used in substantially less than stoichiometric amount so that homopolymerization of thc mono-ene compound is a significant element of the cure reaction.

Mono- or poly-enes having α-substituted styryl functionality, such as α-methylstyrene, α-chlorostyrene and compounds having plural α-methylstyryl functional groups may have a significant inhibiting effect on the air activated cure of the compositions of the invention. Use of such compounds can provide a useful function in allowing the formulator to slow cure speed in some formulations. However, if such compounds are used in the compositions of the invention, they should be limited to very low levels; generally less than 3%, more preferably less than 1%, and even more preferably less than 0.5% by weight of the composition.

As described in US 5,399,624, purification of the polyene by contacting it with an amphoteric treating agent selected from the group consisting of silicated magnesium oxide, basic aluminum oxide, silica gel, magnesium oxide, magnesium hydroxide, calcium oxide, calcium hydroxide, barium oxide, and barium hydroxide, and then separating the resin from the treating agent prior to mixturc with the polythiol may significantly improve the shelf life ofthe thiol-ene formulation formed therefrom. As described US 5,371,181, incorporated herein by reference, similar treatment of the polythiol component may also be desirable to stabilize the cure speed performance of the composition on aging and to further stabilize the shelf-life of the formulation.

The polythiol component of the inventive compositions may be any compound having two or more thiol groups per molecule. Suitable polythiols are described in US 3,661,744 at Col. 8, line 76 - Col. 9, line 46 and US 4,119,617, at Col. 7, lines 40-57. Especially preferred are polythiols obtained by esterification of a polyol with an a or β-mercaptocarboxylic acid such as thioglycolic acid, or β-mercaptopropionic acid. Particularly preferred polythiols are trimethylolpropane-trimercaptoacetate, trimethylolpropane-tri-mercaptopropionate, pentaerythritol tetramercaptoacetate and pentaerythritol tetrakis-β-mercaptopropionate (PETMP).

It has been found that in some thiol-ene compositions, polythiols obtained by esterification of a tetra or higher functionality polyol with an α or β-mercaptocarboxylic acid such as thioglycolic acid, or β-mercaptopropionic acid, especially pentaerythritol tetramercaptoacetate and pentaerythritol tetrakis-β-mercaptopropionate (PETMP), do not always give fully miscible formulations with the result that they sediment on standing. This is not desirable for many commercial applications. Thiol functional oligomers such as described in US 5,459,175, incorporated herein by referencc, may be used to solve this problem if it occurs.

The ratio of the polyene to the polythiol component can be varied within a wide range. A range ofene to thiol groups offrom about 1.0:0.05 to about 1.0:2.0, more preferably between about 1.0:0.1 and about 1.0:1.5, may be used. For compositions other than those containing (meth)acrylate polyenes it is most preferred that the ene/thiol ratio be from about 1.0:0.8 to about 1.0:1.3. For (meth)acrylate polyene based formulations, very good cured properties may be obtained at much lower thiol ratios so that the most preferred range for such formulations is from about 1.0:0.05 to about 1.0:1.3. As noted above, where the ene component is, or comprises, a mono-ene, the ratio of ene to thiol groups is desirably kept low, suitably in the range of about 1.0:05 to about 1.0:0.2 so that homopolymerization of the ene component is a significant aspect of the cure mechanism.

The soluble iron compounds used in the inventive formulations include organic iron (III) salts such as oxalate, acetate, maleate, stearate, naphthenate, and citrate, iron (III) chelate compounds such as acetylacetonate and benzoylacetophenoate, and ferrocenyl compounds. The iron compound is suitably added at a level of from about 0.1 ppm to about 1000 ppm Fe, based on the weight of the combined thiol and ene components, more preferably from about I ppm to about 100 ppm Fe.

Prior to addition of the iron compound the polyene and polythiol components or the mixture thereof, are subjected to vacuum or to an inert gas sweep, or both, to remove dissolved oxygen. To assure anaerobic mixing conditions at least the iron containing solution should be subjected to vacuum and/or inert gas bubbling conditions prior to mixing with the thiol component. The formulations of polythiol, polyene and iron compound are then prepared by mixing under vacuum or under an inert gas sweep to maintain anaerobic conditions. After the components are mixed they are maintained under anaerobic conditions until the time of use, suitably by containment in an air impervious container in which any void space is filled with nitrogen or other inert gas.

So long as the formulation is maintained free of oxygen it will remain storage stable. However upon brief exposure to oxygen, for instance by exposure ofa thin film thereof to atmospheric oxygen for about 0.5-20 minutes, the formulations of the invention are activated to cure so that even if subsequently again deprived of oxygen the composition will completely cure. Thus the compositions can be used not only in coating applications but also in adhesive and sealant applications in which the air-activated composition must be deprived of oxygen by assembly of the substrates to be bonded or sealed.

The thiol-ene formulations of the invention may also include other conventional components such as stabilizers, pigments, surfactants, film forming agents, adhesion promoters and the like.

Preferred stabilizers are hydroxylamine salts, most suitably an N-nitrosoaryihydroxylamine salt thereof. Illustrative examples being the ammonium, sodium, potassium, magnesium, strontium, aluminum, copper, zinc, cerium, iron, nickel and cobalt salts of N-nitrosophenylhydroxylamine. The aluminum salt of N-nitrosophenylhydroxylamine, sold under the tradename Q1301 by Wako Pure Chemical Industries, Hawthorne, New York, is preferred. Suitable levels of such inhibitors are between about 10 ppm and 2%, preferably 10 - 50,000 ppm. Other free radical inhibitors may also be useful in the invention, such as sulfur, phenothiazine, hydroquinone, butylated hydroxy toluene (BHT) and the like, at levels of between about 0.5% and 5%.

Preferably the formulations also include an alkenyl substituted phenolic compound, such as 2-propenylphenol, 4-acetoxy styrene, 2-allylphenol, isoeugenol, 2-ethoxy-5-propenylphenol, 2-allyl-4-methyl-6-*t*-butylphenol, 2-propcnyl-4-methyl-6-*t*-butylphenol, 2-allyl-4,6-di-t-butylphenol, 2-propenyl-4,6-di-t-butylphenol and 2,2'-diallyl-bisphenol A, optionally additionally including a free radical scavenger or a hindered phenolic antioxidant. The alkenyl substituted phenolic compounds are suitably employed at levels of 200 ppm - 15,000 ppm, preferably 500 - 7,000 ppm, based on the total weight of the formulation. Still more preferably the formulation also includes a free radical scavenger such as *p*-methoxyphenol (MEHQ), or a hindered phenolic antioxidant such as BHT, or both, at a level of 100-1000 ppm.

Suitable adhesion promoters which may be employed are identified in US 5,028,661, incorporated herein by reference, and various other organic acid and silane compounds known to be useful for promoting adhesion, especially to glass. Examples of adhesion promoters include acrylic and norbornene acid phosphate esters; itaconic, acrylic and methacrylic acids; maleic, fumaric and norbornene dicarboxylic acids and their half esters; and, especially, thiol, epoxy, norbomene, acrylic or methacrylic functional silane compounds having two or thrce hydrolyzable groups bound to silicon. Examples of such silane compounds include 3-methacryloxypropyl trimethoxysilane, mercaptopropyl trimethoxysilane, glycidoxypropyl trimethoxysilane, and the like. The adhesion promoters are employed at conventional levels, suitably about 0.1 - 3.0 percent by weight of the formulation.

Low adhesion compositions prepared without adhesion promoters may be useful as lens protectants, light masks, solventless lens cleaners and gaskets.

Dual curing formulations which include a free radical photoinitiator, in addition to the iron compound activator may also be prepared. Such formulations are especially useful in conformal coating applications where shadow areas caused by substrate components interfere with complete photoinitiated cure but a photocured skin-over is still desirable in order to allow subsequent processing of the substrate without waiting for the coating to cure by the air-activated mechanism. Examples of free radical photoinitiators include benzoin and substituted benzoin compounds, benzophenone, Michler's ketone, dialkoxybenzophenones, dialkoxyacetophenones, etc. The photoinitiator is employed in an amount effective for initiating cure of the formulation upon irradiation with a conventional UV or visible light source, typically 0.5-5 parts by weight based on 100 parts by weight of the thiol and ene components.

The invention may be illustrated by the following non-limiting examples.

### Example A (Comparative example)

The following compositions comprising stoichiometric quantities of diallyidiglycolcarbonate (DADGC) and pentaerythritol tetra-mercaptopropionate (Q 43) were prepared in air with various levels of Fe (III) (AcAc)₃. All the compositions displayed activity in air.

| Fe (III) (AcAc)₃ (ppm Fe) | Color | Skin over time | Exotherm |
|---|---|---|---|
| 500 | Dark green | 2 -3 hours | --------------- |
| 100 | | 1 minute | slight exotherm |
| 50 | green → clear | 10 seconds | large exotherm |
| 25 | green→ clear | ------------- | 80°C after 1 minute |
| 10 | | 15 seconds | large exotherm |
| 5 | green → clear | 15 seconds | large exotherm |
| 0.5 | green → clear | < 1 minute | large exotherm |

### Example B (Comparative example)

The following compositions, comprising stoichiometric quantities of diallyidiglycolcarbonate and pentaerythitol tetra-mercaptopropionate, were prepared in air with various levels of Fe (III) (AcAc)₃ All the compositions displayed activity and polymerized in air.

| Fe (III) (AcAc)₃ (ppm Fe) | Exotherm maximum temperature (°C) | Time to maximum temperature (minutes) |
|---|---|---|
| 5 | 77.7 | 1 |
| 20 | 94 | 2 |
| 30 | 90 | 1 |
| 40 | 85 | 1 |
| 50 | 79 | 2 |
| 100 | 61 | 1.5 |

### Example C (Comparative example)

A formulation comprising diallyl diglycolcarbonate (4.0 g) and pentaerythitol tetra-mercaptopropionate (5 g) was prepared, added to a 25 ml aluminum tube and exposed to a steady stream of inert gas such as nitrogen through a syringe needle for at least two minutes. 1.0 g of diallyl diglycolcarbonate solution containing 200 ppm of ferric acetylacetonate was added to the formulation under the inert atmosphere. The aluminum tube was then sealed by crimping, thus trapping inert gas in the head space above the formulation. The aluminum tube was shaken for 10 - 20 seconds to ensure thorough mixing of the formulation components. The formulation inside the tube polymerized with an exotherm (approximately 80°C) to a solid within five minutes.

### Example D (Comparative example)

A formulation comprising diallyl diglycolcarbonate (4.5 g) and pentaerythitol tetra-mercaptopropionate (5 g) was prepared, added to a 25 ml aluminum tube and exposed to a steady stream of inert gas such as nitrogen through a syringe needle for at least two minutes. Then 0.5 g of diallyl diglycolcarbonate solution containing 2000 ppm of ferric acetylacetonate was added to the formulation under the inert atmosphere. The aluminum tube was then sealed by crimping, thus trapping inert gas in the head space above the formulation. The aluminum tube was shaken for 10 - 20 seconds to ensure thorough mixing of the formulation components. The formulation inside the tube polymerized with an exotherm (approximately 80°C) to a solid within five minutes.

### Example E (Invention example)

A formulation comprising diallyl diglycolcarbonate (4.5 g) and pentaerythitol tetra-mercaptopropionate (5 g) was prepared, added to an aluminum tube and exposed to a steady stream of inert gas such as nitrogen through a syringe needle for at least two minutes. Then 0.5 g of diallyl diglycolcarbonate solution containing 2000 ppm of ferric acetylacetonate, similarly deoxygenated by bubbling with nitrogen, was added to the formulation under the inert atmosphere. The aluminum tube was then sealed by crimping, thus trapping inert gas in the head space above the formulation. The aluminum tube was shaken for 10 - 20 seconds to ensure thorough mixing of the formulation components. The formulation inside the aluminum tube remained liquid.

The formulation was tested as follows. Samples of the formulation were dispensed from the aluminum tube onto glass slides and exposed to air as thin films which cured to a tack free solid within 1 minute. The formulation inside the aluminum tube remained liquid and air sensitive for at least 5 months

### Example F (Invention example)

A formulation was prepared under totally oxygen free conditions as in Example E comprising triallyl isocyanurate (3.8 g), pentaerythitol tetra-mercaptopropionate (5.6 g), vinyl trimethoxy silane (0.19 g), benzoyl cyclohexanol (0.1 g) and a 1% solution of Fe (AcAc)₃ in diallydiglycolcarbonate (0.1 g) and packaged in an aluminum tube. The composition was activated when exposed to air in thin films giving tack free films after 6 minutes. Films (0.5 - 1 mm) cured to solid overnight.

### Example G (Invention example)

A formulation is prepared under totally oxygen free conditions as in Example E comprising pentaerythitol tetra-mercaptopropionate (12.45 g), and diallyldiglycol carbonate (11.4 g) (1:1 ratio of ene to thiol), benzoyl cyclohexanol (0.44 g) and a 1% solution of Fe (AcAc)₃ in diallydiglycolcarbonate (0.1 g) and packaged in an aluminum tube. The composition is activated when exposed to air giving tack-free films after 6 minutes in the dark. The composition is also curable to a tack-free film under ambient visible light within 4 minutes. Spread on glass substrates and cured by ambient light, the composition is easily peelcd without leaving residues, and removing fingerprint and dust residues which are provided on some substrate samples. The composition is suitable for uses such as a lens protectant, light mask, solventless lens cleaner and gasketing.

### Example H (Invention example)

A formulation was prepared under totally oxygen free conditions as in Example E comprising triallyl isocyanurate (3.8 g), pentaerythitol tetramercaptopropionate (5.6 g), glycidoxypropyl trimethoxysilane (0.19 g), benzoyl cyclohexanol (0.1 g) and a 1% solution of Fe (AcAc)₃ in diallydiglycolcarbonate (0.1 g) and packaged in an aluminum tube. The composition was activated when exposed to air in thin films giving tack free films after 8 minutes. Films (0.5 - 1 mm) cured to solid ovemight.

### Example I (Invention example)

A formulation was prepared under totally oxygen free conditions as in Example E comprising triallyl isocyanurate (3.8 g), pentaerythitol tetramercaptopropionate (5.6 g), glycidoxypropyl trimethoxysilane (0.19 g), benzoyl cyclohexanol (0.1 g) and a 1% solution of Fe (AcAc)₃ in diallydiglycolcarbonate (0.15 g), packaged in an aluminum tube. The composition was activated when exposed to air in thin films giving tack free films after 2 minutes. Films (0.5 - 1 mm) cured to solid overnight.

### Example J (Comparative example)

A formulation comprising (10 g) of a solution of pentaerythitol tetramercaptopropionate (12.2 g) and 1,4 cyclohexanediol divinyl ether (10.0 g) was prepared, added to a 25 ml aluminum tube and exposed to a steady stream of inert gas such as nitrogen through a syringe needle for at least two minutcs. A 1% ferric acetylacetonate solution in 1,4 cyclohexanediol divinyl ether (0.075 g) was added to the formulation under the inert atmosphere. The aluminum tube was then sealed by crimping, thus trapping inert gas in the head space above the formulation. The aluminum tube was shaken for 10 - 20 seconds to ensure thorough mixing of the formulation components. The formulation inside the tube polymerized with an exotherm to a solid within five minutes.

### Example K (Invention example)

A formulation comprising pentaerythitol tetra-mercaptopropionate (24.5 g) and 1,4 cyclohexanediol divinyl ether (20.0 g) was prepared, placed into a three necked round bottomed flask fitted with a side arm attached to a flask containing a 1% ferric acetylacetonate solution in 1,4 cyclohexanediol divinyl ether (0.33 g). Both flasks were evacuated to remove dissolved gases and cooled with dry ice acetone solutions, followed by outgassing with nitrogen. This degassing procedure was repeated several times to ensure thorough deoxygenation of the compositions which were then combined and stirred to ensure thorough mixing. The composition was then dispensed under nitrogen into 25 ml aluminum tube each containing approximately 10 g of the composition. The aluminum tubes were then sealed by crimping, thus trapping inert gas in the head space above the formulation. The aluminum tubes were shaken for 10 - 20 seconds to ensure thorough mixing of the formulation components. The formulation, when dispensed from the tubes and cast into thin films, cured in air to tack free solids within 10 seconds.

### Example L (Invention example)

A formulation comprising pentaerythitol tetra-mercaptopropionate (24.5 g), 1,4 cyclohexanediol divinyl ether (20.0 g) and the UV photoinitiator benzoyl cyclohexanol (0.9 g) was prepared, placed into a three necked round bottomed flask fitted with a side arm attached to a flask containing a 1% ferric acetylacetonate solution in 1,4 cyclohexanediol divinyl ether (0.33 g). Both flasks were evacuated to remove dissolved gases and cooled with dry ice acetone solutions, followed by outgassing with nitrogen. This degassing procedure was repeated several times to ensure thorough deoxygenation of the compositions which were then combined and stirred to ensure thorough mixing. The composition was then dispensed under nitrogen into 25 ml aluminum tubes each containing approximately 10 g of the composition. The aluminum tubes were then sealed by crimping, thus trapping inert gas in the head space above the formulation. The aluminum tubes were shaken for 10 - 20 seconds to ensure thorough mixing of the formulation components. The formulation, when dispensed from the tubes and cast into thin films, cured in air to tack free solids within 10 seconds. The formulation also cured in thicker sections (up to 1 mm) in air within 5 minutes.

### Example M (Invention example)

A formulation comprising pentaerythitol tetra-mercaptopropionate (24.5 g), 1,4 cyclohexanediol divinyl ether (1 4.7 g), butyl vinylether (5.0 g) and 1% ferric acetylacetonate solution in 1,4 cyclohexanediol divinyl ether (0.33 g) was prepared using the procedure outlined in Example K. The formulation dispensed from the tubes and cast into thin films in air cured to a tack free solid within 10 seconds. Samples aged at room temperature for four months gave identical performance.

### Example N (Invention example)

A formulation comprising pentaerythitol tetra-mercaptopropionate (12.2 g), 1,4 cyclohexanediol divinyl ether (4.75 g), butyl vinylether (5.0 g) and 1% ferric acetylacetonate solution in 1,4 cyclohexanediol divinyl ether (0.165 g) was prepared using the procedure outlined in Example K. The formulation, when dispensed from the tubes and cast into thin films, cured in air to tack free solids within 2 - 3 minutes. Samples aged at room temperature for four months gave identical performance.

### Example O (Comparative example)

A series of formulations comprising pentacrythitol tetramercaptopropionate (1.22 g), polyethylene glycol divinyl ether (DVE-3 ) (1.0 g) and ferric acetylacetonate (see table) were prepared and polymerized in air. The maximum temperatures (Tₘₐₓ) and times to Tₘₐₓ were recorded. Results are given below:

| Fe (AcAc)₃ (ppm Fe) | Tₘₐₓ (°C) | Time to Tₘₐₓ (mins) |
|---|---|---|
| 3.5 | 35 | 3- 10 |
| 11 | 60 | 0.5 |
| 63 | 55 | 1.0 |
| 125 | 50 | 2.5 |

### Example P (Comparative example)

A series of formulations comprising equivalent weights of pentaerythitol tetra-mercaptopropionate and polyethylene glycol divinyl ether, together with 75 ppm ferric acetylacetonate and polyethylene glycol dimethacrylate (PEGMA) at 1, 2, 3, 4, 5 and 10% were prepared and polymerized in air. The maximum temperatures (Tₘₐₓ) and times to Tₘₐₓ were recorded. Results are given below:

| PEGMA (%) | Tₘₐₓ (°C) | Time to Tₘₐₓ (min) |
|---|---|---|
| 1 | 60 | 3 |
| 2 | 60 | 3.5 |
| 3 | 60 | 5.5 |
| 4 | 60 | 6.0 |
| 5 | 59 | 7.0 |
| 10 | 49 | 10.0 |

### Example Q (Invention example)

A formulation comprising pentaerythitol tetra-mercaptopropionate (5.0 g), polyethylene glycol divinyl ether (4.2 g) and 0.1% ferric acetylacetonate solution in DVE-3 (0.75 g) was prepared under totally anaerobic conditions as described in Example K. The formulation was tested by spreading onto glass slides which cured tack free as thin films within two minutes in air.

### Example R (Invention example)

A formulation comprising pentaerythitol tetra-mercaptopropionate (5.0 g), polyethylene glycol divinyl ether (4.2 g) and 0.1% ferric acetylacetonate solution in hydroxypropyl methacrylate (0.75 g) was prepared under anaerobic conditions as described in Example K. The formulation was tested by spreading onto glass slides which cured tack free after 15 minutes in air. This formulation remained liquid and active inside the aluminum tube after 5.5 months.

### Example S (Comparative example)

A formulation comprising pentaerythitol tetra-mercaptopropionate (24.4 g) and polyethylene glycol divinyl ether (DVE-3) (820.2 g) was prepared in air. To respective 9.5 g aliquots of this formulation were added:
(a) 0.1% ferric methacrylate solution in DVE-3 (0.75 g)
(b) 0.1% ferrocene solution in DVE-3 (0.75 g)
Both formulations (a) and (b) polymerized to solids with exotherms within 5 minutes

### Example T (Invention example)

A formulation comprising pentaerythitol tetra-mercaptopropionate (5.5 g) and triethyleneglycol divinylether (3.8 g) was placed into a 25 ml aluminum tube and degassed in a manner outlined in Example K prior to the addition of 0.1% Fe (AcAc)₃ in triethyleneglycol divinylether (0.75 g) which had previously been degassed. The aluminum tube was sealed and shaken gently for 20 - 30 seconds to ensure thorough mixing of composition. The composition was tested by dispensing from a closed aluminum tube and spreading onto glass slides. It was observed that the composition developed a skin at the surface almost immediately and thin samples were dry to touch within one minute.

### Example U (Invention example)

A formulation comprising hydroxypropyl methacrylate (7.0 g), pentaerythitol tetra-mercaptopropionate (1.0 g), butyl vinylether (1.0 g), methacrylic acid (0.5 g) and 0.1% Fe (AcAc)₃ in hydroxypropyl methacrylate (0.5 g) was placed into a 25 ml aluminum tube and degassed in a manner outlined in the earlier examples The aluminum tube was sealed and shaken gently for 20-30 seconds to ensure thorough mixing.

The adhesive was tested as follows. Samples of the adhesive were dispensed from the aluminum tube and spread onto mild steel test-pieces (4 x 1 inches) to form a film of approximately 0.1 mm in depth and exposed to air for a measured interval (hereafter referred to as the open time). Following the open time the mild steel test-pieces were brought together to form an adhesive joint with 0.5 inch overlap and allowed to cure for 24 hours. The bonds strengths for bonds assembled using the above procedure were tested according to ASTM D-1002 and the results are presented in the table below.

| Open Times (minutes) | Shear Strengths (MPa) |
|---|---|
| 2 | 2.66 |
| 10 | 4.6 |

### Example V (Invention example)

A formulation comprising triethyleneglycol dimethacrylate (8.5 g), pentaerythitol tetra-mercaptopropionate (1.0 g) and methacrylic acid (0.5 g) was placed into a 25 ml aluminum tube and degassed by bubbling nitrogen gas through a syringe needle for 10 minutes. Then a 0.1% Fe (AcAc)₃ in triethyleneglycol dimethacrylate (0.1 g), previously degassed was added and the aluminum tube was sealed and shaken gently for 20 - 30 seconds to ensure thorough mixing. The adhesive composition was tested by dispensing the adhesive onto threaded bolts and exposing to air for a determined interval, hereafter referred to as the open time (O/T). Following this interval nuts were threaded onto the bolts and allowed to stand at room temperature for 24 hours. The torque strengths were determined and are presented in the following table.

| Open times (Minutes) | Break strengths (Nm) | Prevail Strengths (Nm) |
|---|---|---|
| 2 | 2.6 | 13.2 |
| 5 | 2.4 | 21.4 |
| 10 | 2.2 | 19.4 |
| 20 | 3.4 | 12.4 |

### Example W (Invention example)

A formulation comprising triethyleneglycol dimethacrylate (8.25 g), pentaerythitol tetra-mercaptopropionate (1.0 g) and methacrylic acid (0.5 g) was placed into a 25 ml aluminum tube and degassed by bubbling nitrogen gas through a syringe needle for 10 minutes. Then a 0.1% Fe (AcAc)₃ in triethyleneglycol dimethacrylate (0.25 g), previously degassed, was added and the aluminum tube was sealed and shaken gently for 20 - 30 seconds to ensure thorough mixing. The adhesive composition was tested by dispensing the adhesive onto threaded bolts and exposing to air for a determined interval, hereafter referred to as the open time (O/T). Following this interval nuts were threaded onto the bolts and allowed to stand at room temperature for 24 hours. The torque strengths were determined and are presented in the following table.

| Open times (Minutes) | Break strengths (Nm) | Prevail Strengths (Nm) |
|---|---|---|
| 2 | 2.6 | 17.8 |
| 5 | 1.8 | 15.8 |
| 10 | 1.8 | 15.8 |
| 20 | 2.2 | 16.0 |

Comparative examples A, B and O, although prepared in air and thus not within the scope of the invention hereof, illustrate the effect of different levels of iron on the cure speed of the inventive compositions after they have been exposed to air. Comparative example P similarly illustrates the cure speed effect of different levels of a dimethacrylate compound on the inventive compositions after they have been exposed to air. Comparative example P illustrates the catalytic effect of other soluble iron compounds. Comparative examples C, D and J illustrate the necessity of completely anaerobic conditions, as opposed to mere oxygen exclusion, in order to obtain storage stable formulations.

Although the present invention has been described in terms of specific embodiments, it is anticipated that alterations and modifications thereof will no doubt become apparent to those skilled in the art. It is therefore intended that the following claims be interpreted as covering all such alterations and modifications as fall within the true spirit and scope of the invention.

## Claims

1. A storage stable, one-part, air-activatable, polymerizable composition prepared by mixing:
(a) an organic ene component comprising at least one organic ene compound having at least one non-aromatic carbon-carbon double or triple bond per molecule which is susceptible to addition reactions with thiol groups;
(b) at least one organic polythiol compound having at least two thiol groups per molecule; and
(c) an iron compound to initiate cure of the composition under aerobic or anaerobic conditions after exposure of the composition to air;
with the provisos that:
the composition is free of compounds having a structure of the formula I below: 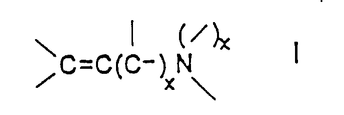 the composition is free of oxime compounds;
the composition does not contain a peroxide, or a peroxide precursor which produces peroxide in the absence of air, or any ingredient which is a significant source of radicals in the dark and in the absence of air;
the iron compound having been added to said mixture under anaerobic conditions; and the composition being maintained and stable under anaerobic conditions.

2. A composition according to claim 1 wherein the ene compound is a polyene, preferably having a plurality of norbornene, vinyl, vinyl ether, acrylic or allylic groups.

3. A composition as claimed in any of claims 1 or 2 wherein the ene component further comprises a mono-ene compound, preferably a mono (meth)acrylic compound or a mono vinyl ether compound

4. A composition as claimed in any of claims 1 to 3 wherein the ene component comprises a mixture of at least one compound having at least two allylic or vinyl functional groups thereon and at least one compound having at least one (meth)acrylic group thereon.

5. A composition as claimed in any of claims 1 to 4 wherein the ene component includes a compound containing an α-substituted styryl group thereon, said α-substituted styryl group containing compound being present in the composition at a level of less than about 3% by weight of the composition.

6. A composition as claimed in any of claims 1 to 5 wherein the iron compound is added to said composition in an amount of from 0. 1 ppm to 1000 ppm Fe, preferably from 1 ppm to 100 ppm Fe.

7. A composition as claimed in any of claims 1 to 6 wherein the ene component and polythiol are added to the composition in amounts such that the ratio ene to thiol groups is from 1.0:0.05 to 1.0:2.0, preferably from 1.0:0.1 to 1.0:1.5.

8. A composition as claimed in any of claims 1 to 7 wherein the ene component comprises a mono-ene and the ratio of ene to thiol groups is from 1.0:0.5 to 1.0:0.2.

9. A composition as claimed in any of claims 1 to 8 comprising a carboxylic acid compound, preferably acrylic or methacrylic acid.

10. A composition as claimed in any of claims 1 to 9 further comprising a photoinitiator.

11. A composition as claimed in any of claims 1 to 10, the composition being free of compounds comprising an α-substituted styryl group.

12. A method of preparing a storage stable curable composition comprising an ene component, a polythiol component and an iron compound, the composition being activatable by exposure to oxygen, comprising:
deoxygenating the iron compound and the ene component or a mixture of the iron compound and the ene component before mixing said iron compound and the ene component with the polythiol;
mixing said iron compound and the ene component with the polythiol under anaerobic conditions; and then storing the composition under anaerobic conditions until the time of use, provided that the composition is free of compounds having a structure of the formula I below: 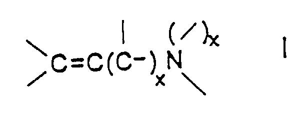 the composition is free of oxime compounds;
the composition does not contain a peroxide, or a peroxide precursor which produces peroxide in the absence of air, or any ingredient which in the dark is a significant source of radicals in the absence of air.

13. A method as claimed in claim 12 wherein the polythiol component is deoxygenated before mixing with the iron compound.

14. A method of providing a cured polymeric coating on a substrate comprising applying a liquid film of a composition as claimed in any of claims 1 to 11 to the substrate and exposing the film to air for sufficient period to activate curing of said composition.

15. A method of bonding a pair of substrates together comprising applying a liquid film of a composition as claimed in any of claims 1 to 11 to one or both of the substrates, exposing the film to air for sufficient period to activate curing of said composition and then joining the two substrates together before the film has cured to a solid.
